# EUROPEAN PATENT APPLICATION

(11) **EP 4 554 193 A1**
(43) Date of publication of application: **14.05.2025**
(21) Application number: 23209204.9
(22) Date of filing: 10.11.2023
(51) Int. Cl.: H04L 69/24, H04L 41/50, H04W 28/24

(54) **METHOD FOR NEGOTIATING A RELIABLE NETWORK COMMUNICATION**

(71) Applicant: Robert Bosch GmbH, 70442 Stuttgart (DE)
(72) Inventor: Hassan, Khaled Shawky, 31157 Sarstedt (DE); Schneider, Peter, 71088 Holzgerlingen (DE); Jornod, Guillaume, 10243 Berlin (DE); Ramos Cantor, Oscar Dario, 31135 Hildesheim (DE); Stark, Maximilian, 20249 Hamburg (DE)

(57) **Abstract**

A computer-implemented method for negotiating a reliable network communication is provided. The method comprises transmitting, from a client device, a first client request comprising a set of application requirements associated with a network service quality to a network entity. Further, the method comprises receiving, from the network entity, a first network entity response associated with a network capability to fulfil the set of application requirements. Further, the method comprises performing a first communication action determined based on the first network entity response associated with the capability to fulfil the set of application requirements.

## Description

### Technical Field

The present application relates to a computer-implemented method for reliable network communication based on a client request comprising a set of application requirements, associated client device and network entity, computer program product and computer readable medium.

### Background

Autonomous driving and developments in the field of Industry 4.0 require the exchange of significant data volumes across wide networks. Not infrequently, due to network congestion caused by a large number of users communicating over a network and/or large data volumes, data packets may be lost or significant latencies may occur. Especially safety-critical applications rely on reliable network communication to provide the necessary functions and ensure safety, for example in road traffic and/or the operation of autonomous systems.

In wireless communications, different mechanisms for the application to request communication service with a given quality of service (QoS) are available. QoS (Quality of Service) involves manipulating network traffic in such a way that a network device like a router or switch forwards it according to the required behaviors of the applications generating this network traffic. In other words, QoS allows a network device to differentiate the network traffic and then apply different behaviors to the network traffic.

Different networked applications have different degrees of "intrinsic fault-tolerance" with respect to e.g., delays and/or maximum number of messages losses within a specific interval. While for Application-A a full connectivity loss of several seconds might be acceptable, a second Application-B might only be able to compensate/tolerate the loss of e.g., 2 consecutive messages which might translate to a tolerance of complete connectivity loss in the order of magnitude of milliseconds (depending on the periodicity of message transmission). Further techniques are necessary to further improve data transfer over a network in terms of specific application requirements.

### Summary

According to a first aspect, there is provided a computer-implemented method for negotiating a reliable network communication. The method comprises transmitting, from a client device, a first client request comprising a set of application requirements associated with a network service quality to a network entity. Further, the method comprises receiving, from the network entity, a first network entity response associated with a network capability to fulfil the set of application requirements. Further, the method comprises performing a first communication action determined based on the first network entity response associated with the capability to fulfil the set of application requirements.

According to a second aspect, there is provided a client device. The client device comprises a processor unit, wherein the processor unit is configured to execute at least one application, transmit a first client request comprising a set of application requirements associated with a network service quality to a network entity, receive, from the network entity, a first network entity response associated with a network capability to fulfil the set of application requirements, and performing a first communication action determined based on the first network entity response associated with the capability to fulfil the set of application requirements.

According to a third aspect, there is provided a network entity. The network entity comprises a processor unit, wherein the processor unit is configured to receive, from a client device, a first client request comprising a set of application requirements associated with a network service quality to a network entity, determine a network capability to fulfil the set of application requirements, transmit a first network entity response associated with the capability to fulfil the set of application requirements to the client device, transmit data according to a first communication action determined by the client device.

According to a fourth aspect, there is provided a computer program product. The computer program product comprises instructions which, when the program is executed by a processor, cause the processor to perform the steps of computer implemented method according to the first aspect.

According to a fifth aspect, there is provided a computer-readable medium. The computer readable medium comprises instructions which, when executed by a processor, cause the processor to perform the steps of computer implemented method according to the first aspect.

An effect of the foregoing aspects may be seen in that a reliability metric may be explicitly negotiated to enhance the reliability of network communication by explicitly negotiating reliability metrics.

Furthermore, different requirements can be negotiated with the network for various applications, based on which data transfer takes place. The techniques of the present disclosure may enable more reliable execution of safety-critical functions, as necessary information can be transmitted more reliably over a network. In some examples, the application requirements on the basis of which data transfer takes place can be negotiated for multiple subnets of a network. This ensures that the requirements of the applications are met not only in individual domains of an entire network. Through the techniques of the present disclosure, application requirements can be proposed by the network that can be met by the network.

In examples, a definition of a variable time interval in which the respective application requirements need to be fulfilled with the requested level of reliability may be performed. Additionally, in case the applications initial request cannot be matched by the network, the techniques of the present disclosure may allow to negotiate a feasible set of application requirements to fit the current network-capabilities with at least a minimal viable set of application requirements.

In examples, the techniques presented herein may enable reliable data transfer. In examples, the safety of autonomous systems, for example in road traffic, may be improved.

### Brief Description of the Drawings

Exemplary embodiments are depicted in the figures, which are not to be construed as limiting the claims, and are explained in greater detail below. Where possible, like reference numerals denote analogous or like features in different figures.
- **Fig. 1**: schematically illustrates a computer-implemented method for negotiating a reliable network communication.
- **Fig. 2**: schematically illustrates exemplary steps of performing a communication action.
- **Fig. 3**: schematically illustrates an exemplary network connecting a client device and a receiving device.
- **Fig. 4**: schematically illustrates an exemplary information exchange between a client device and a network entity when a set of application requirements can be fulfilled.
- **Fig. 5**: schematically illustrates an exemplary information exchange between the client device and the network entity when a set of application requirements can be fulfilled partially or less.

### Detailed Description

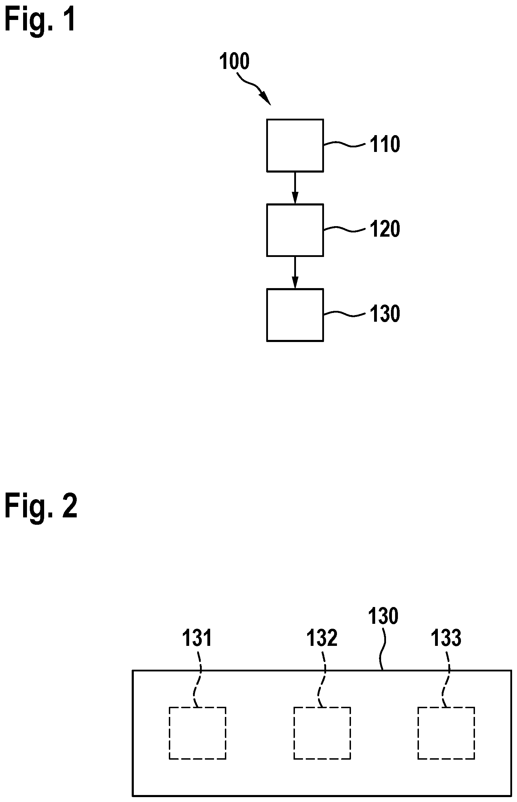

**Fig. 1** schematically illustrates a computer-implemented method for negotiating a reliable network communication.

According to a first aspect, the computer-implemented method 100 for negotiating a reliable network communication comprises transmitting, from a client device, 110 a first client request 11 comprising a set of application requirements associated with a network service quality to a network entity 20. The method comprises receiving 120, from the network entity 20, a first network entity response 21 associated with a network capability to fulfil the set of application requirements. Further, the method comprises performing 130 a first communication action determined based on the first network entity response 21 associated with the capability to fulfil the set of application requirements. In examples, the first network entity response 21 may comprise a guarantee to fulfil at least one application requirement of the set of application requirements. In examples, the first network entity response 21 may comprise a guarantee to fulfil at least one application requirement of the set of application requirements in an adjusted form. In examples, the first network entity response 21 may comprise a guarantee to at least partially fulfil at least one application requirement of the set of application requirements. For example, the set of application requirements may comprise one or more of application requirements.

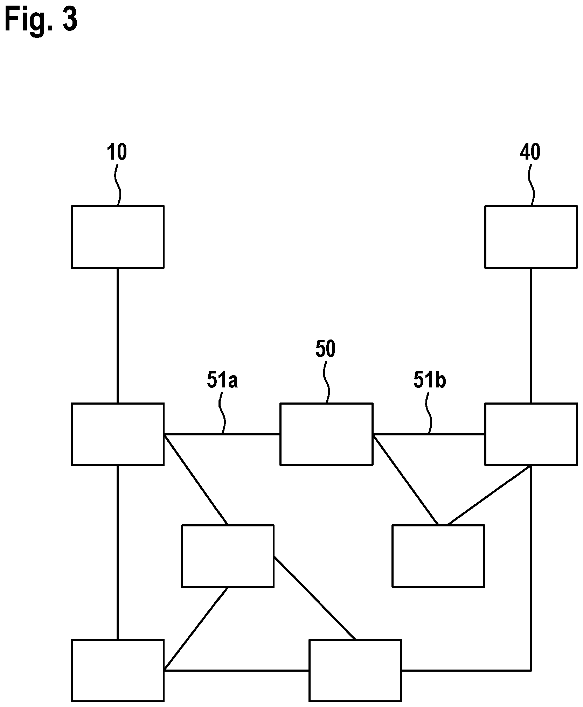

**Fig. 3** schematically illustrates an exemplary network connecting the client device 10 and a receiving device 40.

In some examples, the network may comprise at least one network node 50 such as a switch, router, access point, any kind of base station, or any kind of communication interface configured to connect the client device 10 and the receiving device 40. The network may comprise data links 51a, 51b connecting the at least one network node 50 with the client device 10 and receiving device 40. In some examples, the network may comprise a (direct) data link connecting the client device and the network entity. The network may comprise multiple subnetworks. In some examples the subnetworks may be defined by different types, for example, different transmission technologies and/or communication protocols. The network and/or subnetwork may comprise a computer network, a telecommunications network or a wireless network, e.g. 5G. The network and/or the multiple subnetworks may be based one or more communication technologies and/or communication protocols such as IEEE 802.11 (WLAN), GSM, UMTS, LTE, and/or 5G NR. In examples, the network may comprise a Vehicle-to-X network (V2X). In some examples the network may be bounded to a specific geographically area. The network may be understood herein as one or multiple communication technologies providing an end-to-end communication service between a client device and a receiving device 40. In examples, the network entity 20 may comprise a server and/or may be a service running on a server. In some examples, the network entity 20 may be part of the network or may be linked to the network. In some examples, the client device 10 may be linked to a network node 50, such as a base station, of the network in order to communicate with the network entity 20. In some examples, the network entity 20 may comprise a server and/or may be a service in a 5G core network or may be linked to a 5G core network. In some examples, the client device 10 may be linked to a network node 50 such as a base station of the network via a 5G RAN link.

In embodiments, the network service quality is at least defined by one or more quality parameters, and wherein the set of application requirements comprises at least one quality parameter of the one or more quality parameters. In examples, the one or more quality parameters may comprise (minimum) bandwidth, (maximum) latency (delay), (maximum) jitter, (maximum) packet loss, (maximum) packet error rate, (maximum) message inter-reception time, (maximum) transmission interval, (maximum) interval between two successive transmission, (maximum) periodicity of transmission (or periodic traffic), reliability, throughput, availability, prioritization, service guarantees, burstiness, congestion control, fairness, scalability, security and/or privacy, maximal number of packets per interval, minimal number of packets per interval, maximal payload size, minimal payload size, maximal consecutive loss tolerance, maximal latency variation, maximal misordering, and/or next hop information.

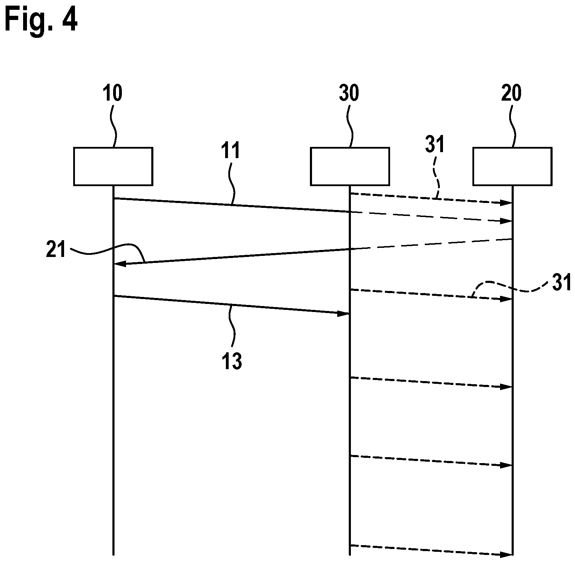

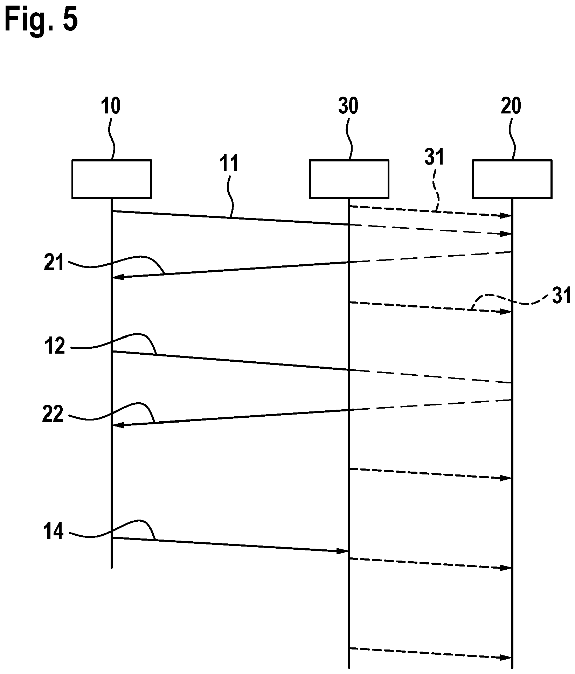

In some examples, the network may comprise a lower network entity 30 providing measurement reports 31 to the network entity 20 as shown in **Fig. 4** and **Fig. 5****.** In examples, the lower network entity 30 may comprise, at least partially, a presentation layer, a session layer, a transport layer, a network layer, a data link layer, and/or a physical layer. In examples, the lower network entity 30 may be responsible for transmitting raw binary data as electrical, optical, or wireless signals over the physical medium. The lower network entity 30 may deal with characteristics such as the type of transmission medium (e.g., copper wires, optical fibers, radio waves), signal modulation, data encoding, and the basic hardware components like cables, connectors, and transmitters/receivers.

The primary focus of the lower network entity 30 may be on ensuring reliable and efficient transmission of bits between devices, setting the groundwork for higher-level communication protocols to operate effectively. The measurement reports of the lower layer entity 30 may comprise information about the one or more quality parameters defining the network service quality. The information about the one or more quality parameters may comprise numerical values for the one or more quality parameters computed and/or measured by the lower network entity 30. In examples, the lower network entity 20 may be configured to provide the measurement reports 31 in regular time intervals to the network entity 20. In examples, the lower network entity 20 may be configured to provide the measurement reports 31 after being requested by the network entity 20.

In embodiments, the set of application requirements further comprises at least one reliability measure associated with the at least one quality parameter. In embodiments, the at least one reliability measure may be based on the occurrence of a communication failure associated with the at least one quality parameter. In examples the at least one reliability measure may comprise a reliability metric expressing a statistical probability with which no fault will occur. In examples, the at least one reliability measure may comprise Mean Time to Failure (MTTF), Rate of Occurrence of Failure (ROCOF), and/or Probability of Failure on Demand (POFOD).

In embodiments, the set of application requirements may further comprise at least one definition of a communication failure associated with the at least one quality parameter. In examples, the at least one definition of the communication failure associated with the at least one quality parameter may comprise a first quantification of the at least one quality parameter, such as a numerical range (e.g. deviations in time and amplitude), in which the network provides a faulty quality of service with respect to the at least one quality parameter from the perspective of the respective application. In addition or alternatively, the at least one definition of the communication failure associated with the at least one quality parameter may comprise a second quantification of the at least one quality parameter, such as a numerical range (e.g. deviations in time and amplitude), in which the network provides a still acceptable quality of service with respect to the at least one quality parameter from the perspective of the respective application. In some examples, the first quantification may be derived from the second quantification. In some examples, the first quantification may be the complement of the second quantification. For example, a second quantification of the at last one quality parameter "latency" comprised in the definition of the communication failure associated with the at least one quality parameter "latency" may comprise a maximum latency of 100 ms which is still acceptable. In this example, the first quantification may be derived from the second quantification. In this example, the first quantification may comprise a faulty latency of more than 100 ms. In examples, the at least one reliability measure in combination with the at least one definition of a communication failure may form an application requirement with respect to the at least one quality parameter.

In embodiments, the set of application requirements may comprise a timing parameter associated with the at least one quality parameter. In embodiments, the timing parameter may be configured to define a time window in which the network should provide the network service quality defined by the at least one quality parameter. In examples, the time window my comprise a first time and a second time. The time window may comprise a time span starting from a specific time. The first time, second time and/or specific time may comprise a time specification using at least one of a year, month, day, hours, minutes, seconds, and/or milliseconds. For example, the time window may be defined by [start: 2023/05/21-09:05:20] to [end: 2023/05/21-09:05:30].

**Fig. 4** schematically illustrates an exemplary information exchange between a client device and a network entity when a set of application requirements can be fulfilled.

In embodiments, performing the first communication action may comprise performing 131 a normal data transmission process using the network according to the set of application requirements when the first network entity response 21 comprises information that the network provides the capability to fulfil the set of application requirements. In examples, the normal data transmission process may comprise transmitting data 13 via the network from the client device 10 to the receiving device 40 (end-to-end communication). In examples, the data may comprise safety-critical data.

**Fig. 5** schematically illustrates an exemplary information exchange between the client device 10 and the network entity 20 when a set of application requirements can be fulfilled partially or less.

**Fig. 2** schematically illustrates exemplary steps of performing 130 a communication action.

In embodiments, performing 130 the first communication action may comprise performing 132 a negotiation process to determine an alternative set of application requirements associated with the network service quality when the first network entity response 21 comprises information that the network provides the capability to fulfil the set of application requirements partially or less. In examples, the information may comprise a guarantee to fulfil at least one application requirement of the set of application requirements in an adjusted form.

In embodiments, performing 130 the first communication action may comprise performing a best matching data transmission process using the network based on a guarantee, provided in the first network entity response 21, to fulfil at least one application requirement of the set of application requirements in an adjusted form. The guarantee to fulfil at least one application requirement of the set of application requirements may be based on a reliability measure, a definition of a communication failure, and/or a timing parameter different from, respectively, the reliability measure, the definition of a communication failure, and/or the timing parameter comprised in the set of application requirements initially requested by the client device 10. The best matching transmission process may comprise selecting and transmitting data that may be suitable to be transmitted on the basis of the guarantee provided in the first network entity response 21. For example, if the set of application requirements comprises the quality parameter "latency" with a reliability measure of MTTF-X and the network entity response 21 comprises a guarantee to fulfil the "latency" quality parameter with a reliability measure of MTTF-A (for example smaller than MTTF-X) in a time window T_A the method 100 may comprise selecting and transmitting data that may be suitable to be transmitted on the basis of the guarantee (MTTF-A in time window T_A) provided in the network entity response 21.

In embodiments, performing 132 the negotiation process may comprise transmitting a second client request 12 comprising an adjusted set of application requirements to a network entity 20. Performing 132 may further comprise receiving, from the network entity 20, a second network entity response 22 associated with a network capability to fulfil the adjusted set of application requirements. Performing 132 may further comprise performing a second communication action determined based on the second network entity response 22 associated with the capability to fulfil the adjusted set of application requirements. In examples, the negotiation process may be part of or may comprise a handshake process. In examples, the handshake process may comprise steps to establish a connection between the client device 10 and the network entity 20 and/or the network. In examples, the handshake process may comprise a handshake process as known in the prior art. In examples, the adjusted set of application requirements may comprise application requirements which are more relaxed and/or lower (qualitatively and/or quantitively) than the previous set of application requirements. In this context, "more relaxed" and/or "lower" may be understood in such a way that the application requirements can be fulfilled (technically) easier by the network. In examples, the adjusted set of application requirements may comprise application requirements which comprise at least one adjusted definition of the communication failure associated with the at least one quality parameter in order to lower the application requirements. In examples, the at least one reliability measure associated with the quality parameter may be adjusted in the adjusted set of application requirements in order to lower the application requirements. For example, if in the previous set of application requirements an MTTF greater than a first value is required, an adjusted MTTF may require a second value smaller than the first value. In examples, the adjusted set of application requirements may comprise an adjusted timing parameter. For examples, the time window defined by the adjusted timing parameter may be shifted in relation to the time window defined by the previous timing parameter.

In embodiments, the first network entity response 21 from the network entity 20 may comprise a recommendation for adjusting the set of application requirements associated with the network capability. In examples, performing 132 the negotiation process may comprise transmitting a third client request comprising an adjusted set of application requirements 12 to fit the network capability based on the recommendation for adjusting the set of application requirements to a network entity 20. Further, performing 132 the negotiation process may comprise receiving, from the network entity 20, a third network entity response associated with a network capability to fulfil the adjusted set of application requirements. Further, performing 132 the negotiation process may comprise performing a third communication action determined based on the third network entity response associated with the capability to fulfil the adjusted set of application requirements. The recommendation for adjusting the set of application requirements may comprise a suggestion for requirements relaxation in order to lower the requirements qualitatively and/or quantitatively. For example, if the network is already processing a lot of traffic for the next 5 seconds but will be able to free a lot of communication resources afterwards, simply shifting the requested time window could be a good relaxation option for the application.

In embodiments, performing the second communication action and/or performing the third communication action comprise performing 133 an adjusted data transmission process using the network according to the adjusted set of application requirements when the second network entity response 22 or the third network entity response, respectively, comprises information that the network provides the capability to fulfil the adjusted set of application requirements. In examples, the adjusted data transmission process may comprise transmitting data 14 via the network from the client device to the receiving device 40 (end-to-end communication). In examples, the data may comprise safety-critical data. In examples, the data transmitted during the adjusted data transmission process may be the same data that would have been transmitted if the application requirements had been fulfilled in a first pass. In examples, the data transmitted during the adjusted data transmission process may also be adjusted. For example, during the adjusted data transmission process the data transmitted may comprise less safety-critical data compared to data transmitted during the normal data transmission process. In general, the first, second, third communication action, and/or the negotiation process may be performed iteratively, for example to satisfy minimum application requirements.

According to a second aspect, the client device 10 comprises a processor unit. The processor unit is configured to execute at least one application. Further, the processor unit is configured to transmit a first client request 11 comprising a set of application requirements associated with the network service quality to the network entity 20. The processor unit is configured to receive, from the network entity 20, a network entity response 21 associated with a network capability to fulfil the set of application requirements. The processor unit is configured to perform a communication action 150 determined based on the network entity response 21 associated with the capability to fulfil the set of application requirements. The at least one application may comprise one or more functions for autonomous and/or assisted driving. In examples, the client device 10 may be implemented locally in a vehicle or (at least partially) implemented in a backend that is communicatively connected to the vehicle. For example, the client device 10 may comprise a control unit of a vehicle and/or a robot. In examples, the processor unit may comprise or may be at least connected to a radio interface in order to transmit the first client request 11 and/or to receive the network entity response. The client device 10 may further comprise a memory to at least temporarily store the set of application requirements associated with the network service quality and/or the network entity response 21.

According to a third aspect, the network entity 20 comprises a processor unit. The processor unit is configured to receive, from a client device 10, a first client request 11 comprising a set of application requirements associated with a network service quality to a network entity 20. The processor unit is configured to determine a network capability to fulfil the set of application requirements. Further, the processor unit is configured to transmit a network entity response 21 associated with the capability to fulfil the set of application requirements to the client device 10. The processor unit is configured to transmit data 13 according to a communication action determined by the client device 10.

In examples, the network entity 20 may be implemented at least partially in a backend that is communicatively connected to a vehicle. In examples, the processor unit may comprise or may be at least connected to a radio interface in order to receive, from the client device 10, the set of application requirements associated with the network service quality and/or to transmit the network entity response 21. The network entity 20 may further comprise a memory to at least temporarily store the set of application requirements associated with the network service quality and/or the network entity response 21. In examples, the network entity may comprise a server and/or may be a service in a 5G core network or may be linked to a 5G core network. In examples, the network entity 20 may comprise, at least partially, a presentation layer, a session layer, a transport layer, a network layer, a data link layer, and/or a physical layer. In examples, the network entity 20 may comprise communication interfaces or may be at least communicatively coupled to the lower network entity 30 in order to receive measurement reports 31 provided by lower network entity 30 as shown in **Fig. 4** and **Fig. 5****.** In examples, the network entity 20 may be configured to determine the network capability to fulfil the set of application requirements based on the measurement reports 31 provided by the lower network entity 30. As mentioned, the network connecting at least the client device 10 and the receiving device 40 may comprise at least one network node 50 as shown in **Fig. 3****.** In examples, the network entity 20 may be configured to collect measurement reports from the at least one network node 50 in order to receive information about the one or more quality parameters defining the network service quality. In examples, the network entity 20 may be configured to collect measurement reports from at least two network nodes 50 supporting the same or different communication technologies in order to receive information about the one or more quality parameters defining the network service quality. In examples, the network entity 20 may be configured to determine the network capability to fulfil the set of application requirements based on the measurement report from at least one of the at least one network node. The network may comprise multiple subnetworks. The multiple subnetworks may support different communication technologies. In examples, the network entity 20 may be configured to receive measurement reports from at least one of the multiple subnetworks in order to receive information about the one or more quality parameters defining the network service quality. In examples, the network entity 20 may be configured to determine the network capability to fulfil the set of application requirements based on the measurement report from at least one subnetwork of the multiple subnetworks. In examples, the network entity 20 may be configured to determine the network capability to fulfil the set of application requirements based on the measurement reports from the multiple subnetworks and/or at least two network nodes. In examples, the multiple subnetworks and/or the at least two network nodes may support different communication technologies.

According to the fifth aspect, the computer program product comprises instructions which, when the program is executed by a processor, cause the processor to carry out the method of the first aspect. In examples, the processor may be comprised in the processing unit of the client device 10 or the network entity 20. In examples, a first portion of the computer program product may be implemented on the client device 10 and a second portion of the computer program product may be implemented on the network entity 20.

According to the sixth aspect, the computer-readable medium comprises instructions which, when executed by a processor, cause the processor to carry out the method of the first aspect. In examples, the computer-readable medium may be comprised in the processing unit of the client device 10 or the network entity 20. In examples, a first portion of the instructions may be stored in the client device 10 and a second portion of the instructions may be stored in the network entity 20.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A computer-implemented method (100) for negotiating a reliable network communication, comprising
- transmitting, from a client device (10), (110) a first client request (11) comprising a set of application requirements associated with a network service quality to a network entity (20);
- receiving (120), from the network entity (20), a first network entity response (21) associated with a network capability to fulfil the set of application requirements; and
- performing (130) a first communication action determined based on the first network entity response (21) associated with the capability to fulfil the set of application requirements.

2. The computer-implemented method (100) according to claim 1, wherein the network service quality is at least defined by one or more quality parameters, and wherein the set of application requirements comprises at least one quality parameter of the one or more quality parameters.

3. The computer-implemented method (100) according to claim 1 or 2, wherein the set of application requirements further comprises at least one reliability measure associated with the at least one quality parameter.

4. The computer-implemented method (100) according to claim 1, 2, or 3, wherein the at least one reliability measure is based on the occurrence of a communication failure associated with the at least one quality parameter.

5. The computer-implemented method (100) according to claim 4, wherein the set of application requirements further comprises at least one definition of the communication failure associated with the at least one quality parameter.

6. The computer-implemented method (100) according to any one of claims 1 to 5, wherein the set of application requirements comprises a timing parameter associated with the at least one quality parameter.

7. The computer-implemented method (100) according to any one of the preceding claims, wherein performing (130) the first communication action comprises
- performing (131) a normal data transmission process using the network according to the set of application requirements when the first network entity response (21) comprises information that the network provides the capability to fulfil the set of application requirements.

8. The computer-implemented method (100) according to any one of the preceding claims, wherein performing (130) the first communication action comprises
- performing (132) a negotiation process to determine an alternative set of application requirements associated with the network service quality when the first network entity response (21) comprises information that the network provides the capability to fulfil the set of application requirements partially or less, or
- performing a best matching data transmission process using the network based on a guarantee, provided in the first network entity response (21), to fulfil at least one application requirement of the set of application requirements in an adjusted form.

9. The computer-implemented method (100) according to claim 8, wherein performing (132) the negotiation process comprises
- transmitting a second client request (12) comprising an adjusted set of application requirements to a network entity (20);
- receiving, from the network entity (20), a second network entity response (22) associated with a network capability to fulfil the adjusted set of application requirements; and
- performing a second communication action determined based on the second network entity response (22) associated with the capability to fulfil the adjusted set of application requirements.

10. The computer-implemented method (100) according to claim 8 or 9, wherein the
first network entity response from the network entity (20) comprises a recommendation for adjusting the set of application requirements associated with the network capability, wherein performing the negotiation process (132) comprises
- transmitting a third client request comprising an adjusted set of application requirements (12) to fit the network capability based on the recommendation for adjusting the set of application requirements to a network entity (20);
- receiving, from the network entity (20), a third network entity response associated with a network capability to fulfil the adjusted set of application requirements; and
- performing a third communication action determined based on the third network entity response associated with the capability to fulfil the adjusted set of application requirements.

11. The computer-implemented method (100) according to claim 9 or 10, wherein performing the second communication action and/or performing the third communication action comprise
- performing (133) an adjusted data transmission process using the network according to the adjusted set of application requirements when the first network entity response or the third network entity response, respectively, comprises information that the network provides the capability to fulfil the adjusted set of application requirements.

12. A client device, comprising
a processor unit, wherein the processor unit is configured to:
- execute at least one application;
- transmit (110) a first client request (11) comprising a set of application requirements associated with a network service quality to a network entity (20);
- receive (120), from the network entity (20), a network entity response (21) associated with a network capability to fulfil the set of application requirements; and
- perform (130) a first communication action (150) determined based on the network entity response (21) associated with the capability to fulfil the set of application requirements.

13. A network entity (20), comprising
a processor unit, wherein the processor unit is configured to:
- receive, from a client device (10), a first client request (11) comprising a set of application requirements associated with a network service quality to a network entity (20);
- determine a network capability to fulfil the set of application requirements;
- transmit a network entity response (21) associated with the capability to fulfil the set of application requirements to the client device (10); and
- transmit data (13) according to a first communication action determined by the client device.

14. A computer program product comprising instructions which, when the program is executed by a processor, cause the processor to perform the steps of computer implemented method claims 1 to 11.

15. A computer-readable medium comprising instructions which, when executed by a processor, cause the processor to perform the steps of computer implemented method claims 1 to 11.
